# EUROPÄISCHE PATENTSCHRIFT

(11) **EP 2 682 236 B1**
(45) Veröffentlichungstag und Bekanntmachung des Hinweises auf die Patenterteilung: **13.12.2017**
(21) Anmeldenummer: 13172328.0
(22) Anmeldetag: 17.06.2013
(51) Int. Cl.: B25F 5/02, A01D 34/90, F16B 7/14

(54) **Handwerkzeugmaschinenpositionierungsvorrichtung**
Handheld machine tool positioning device
Dispositif de positionnement de machine-outil manuelle

(30) Priorität: 04.07.2012 DE 102012211611
(43) Veröffentlichungstag der Anmeldung: 08.01.2014
(73) Patentinhaber: ROBERT BOSCH GMBH, 70442 Stuttgart (DE)
(72) Erfinder: Zador, Endre, Ipswich, Suffolk IP1 3LJ (GB)

(56) Entgegenhaltungen:
- EP-A1- 0 185 001
- EP-A1- 0 294 839
- EP-A1- 0 770 340
- EP-A2- 0 653 364
- US-A- 5 826 341
- US-A1- 2011 236 123

## Beschreibung

### Stand der Technik

Es sind bereits Handwerkzeugmaschinenpositionierungsvorrichtungen bekannt, die ein Gehäuse und eine Einstelleinheit umfassen, die ein beweglich gelagertes Einstellelement zu einer Einstellung eines Abstands des Gehäuses relativ zu einer Werkzeugaufnahme und/oder relativ zu einer Werkstückauflagefläche einer tragbaren Werkzeugmaschine aufweist und die ein schwenkbar gelagertes Fixierelement zu einer Fixierung des Einstellelements in einer Position aufweist.

### Offenbarung der Erfindung

Die Erfindung geht aus von einer Handwerkzeugmaschinenpositionierungsvorrichtung gemäß dem Oberbegriff des Patentanspruchs 1, mit zumindest einem Gehäuse und mit zumindest einer Einstelleinheit, die zumindest ein beweglich gelagertes Einstellelement zu einer Einstellung eines Abstands des Gehäuses relativ zu einer Werkzeugaufnahme und/oder relativ zu einer Werkstückauflagefläche einer tragbaren Werkzeugmaschine aufweist und die zumindest ein schwenkbar gelagertes Fixierelement zu einer Fixierung des Einstellelements in zumindest einer Position aufweist. Eine derartige Handwerkzeugmaschinenpositionierungsvorrichtung geht beispielsweise aus der US 5 826 341 A hervor. Das Fixierelement weist zumindest eine Klemmfläche auf, die zumindest in einer Position des Fixierelements an einer Außenfläche des Einstellelements anliegt. Unter einer "Klemmfläche" soll hier insbesondere eine Fläche, insbesondere eine Fläche des Fixierelements, verstanden werden, die zu einer Fixierung eines Elements direkt an dem Element anliegt und zumindest mittels Reibkräften eine Bewegung des Elements zumindest weitestgehend verhindert. Bevorzugt liegt die Klemmfläche zumindest in einer Position direkt an der Außenfläche des Einstellelements an. Somit liegt das Fixierelement vorzugsweise direkt an der Außenfläche des Einstellelements an. Besonders bevorzugt liegt die Klemmfläche zumindest in einer Fixierposition des Fixierelements zu einer Fixierung des Einstellelements in einer Position relativ zum Gehäuse der Handwerkzeugmaschinenpositionierungsvorrichtung direkt an der Außenfläche des Einstellelements an. Die Klemmfläche weist bevorzugt eine mit der Außenfläche korrespondierende Form auf. Hierbei weist die Klemmfläche vorzugsweise, betrachtet in einer zumindest im Wesentlichen senkrecht zu einer Bewegungsachse des Einstellelements verlaufenden Ebene, eine bogenförmige Ausgestaltung auf. Bevorzugt umfasst das Fixierelement zwei sich gegenüberliegende Klemmflächen, die bogenförmig ausgebildet sind. Vorzugsweise ist das Gehäuse der Handwerkzeugmaschinenpositionierungsvorrichtung einstückig mit einem Handgriff bzw. mit einem Handgriffgehäuse der tragbaren Werkzeugmaschine, die die Handwerkzeugmaschinenpositionierungsvorrichtung umfasst, ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Das Einstellelement ist vorzugsweise als Einstellführungsstange ausgebildet. Bevorzugt ist das Gehäuse der Handwerkzeugmaschinenpositionierungsvorrichtung über das Einstellelement mit der Werkzeugaufnahme bzw. mit einem Antriebseinheitsgehäuse der tragbaren Werkzeugmaschine verbunden. Hierbei ist das Einstellelement vorzugsweise beweglich im Gehäuse der Handwerkzeugmaschinenpositionierungsvorrichtung gelagert. Vorzugsweise ist die Werkzeugaufnahme am Antriebseinheitsgehäuse angeordnet. Der Ausdruck "beweglich gelagert" soll hier insbesondere eine Lagerung einer Einheit und/oder eines Elements relativ zu zumindest einer weiteren Einheit und/oder relativ zu einem weiteren Element definieren, wobei die Einheit und/oder das Element, insbesondere entkoppelt von einer elastischen Verformung der Einheit und/oder des Elements und entkoppelt von bedingt durch ein Lagerspiel hervorgerufenen Bewegungsmöglichkeiten, eine Bewegungsmöglichkeit entlang zumindest einer Achse entlang einer Strecke größer als 1 mm, bevorzugt größer als 10 mm und besonders bevorzugt größer als 20 mm und/oder eine Bewegungsmöglichkeit um zumindest eine Achse um einen Winkel größer als 10°, bevorzugt größer als 45° und besonders bevorzugt größer als 60° aufweist. Besonders bevorzugt ist das Einstellelement translatorisch im Gehäuse der Handwerkzeugmaschinenpositionierungsvorrichtung gelagert. Vorzugsweise wird durch ein Herausziehen des Einstellelements aus dem Gehäuse der Handwerkzeugmaschinenpositionierungsvorrichtung ein Abstand des Gehäuses der Handwerkzeugmaschinenpositionierungsvorrichtung relativ zur Werkzeugaufnahme und/oder relativ zur Werkstückauflagefläche der tragbaren Werkzeugmaschine geändert. Hierbei wird das Einstellelement zu einer Beibehaltung eines Abstands des Gehäuses der Handwerkzeugmaschinenpositionierungsvorrichtung relativ zur Werkzeugaufnahme und/oder relativ zur Werkstückauflagefläche der tragbaren Werkzeugmaschine vorzugsweise mittels des Fixierelements der Einstelleinheit zumindest in einer Position, insbesondere der Fixierposition, relativ zum Gehäuse der Handwerkzeugmaschinenpositionierungsvorrichtung fixiert.

Besonders bevorzugt umfasst die Handwerkzeugmaschinenpositionierungsvorrichtung zumindest eine Anschlageinheit, die zu einer Variation einer maximalen Bewegungsstrecke des Einstellelements in eine von dem Gehäuse weggerichtete Richtung zumindest ein beweglich gelagertes Anschlagelement aufweist. Der Ausdruck "Anschlageinheit" soll hier insbesondere eine Einheit definieren, die zumindest ein Anschlagelement aufweist, das infolge eines mechanischen Anschlagens eines Elements, insbesondere des Einstellelements oder eines das Einstellelement lagernde Lagerelements der Einstelleinheit, am Anschlagelement eine maximale Bewegungsstrecke des Elements begrenzt. Vorzugsweise wird mittels des Anschlagelements eine maximale Bewegungsstrecke des Einstellelements in eine vom Gehäuse der Handwerkzeugmaschinenpositionierungsvorrichtung weggerichtete Richtung begrenzt. Somit wird bevorzugt eine maximale Ausziehstrecke des Einstellelements aus dem Gehäuse der Handwerkzeugmaschinenpositionierungsvorrichtung heraus mittels des Anschlagelements begrenzt. Das Anschlagelement ist vorzugsweise beweglich im Gehäuse der Handwerkzeugmaschinenpositionierungsvorrichtung gelagert. Mittels der erfindungsgemäßen Ausgestaltung der Handwerkzeugmaschinenpositionierungsvorrichtung kann vorteilhaft eine sichere Fixierung des Einstellelements in zumindest einer Position relativ zum Gehäuse der Handwerkzeugmaschinenpositionierungsvorrichtung erreicht werden. Ferner kann konstruktiv einfach mit wenigen Bauteilen eine Fixierung des Einstellelements in zumindest einer Position relativ zum Gehäuse der Handwerkzeugmaschinenpositionierungsvorrichtung erreicht werden. Somit können vorteilhaft Kosten, Bauraum und Montageaufwand eingespart werden. Zudem kann vorteilhaft eine komfortable Einstellung einer maximalen Bewegungsstrecke des Einstellelements an verschiedene Bedienerwünsche erreicht werden. Es kann vorteilhaft eine komfortable Einstellung eines Abstands des Gehäuses der Handwerkzeugmaschinenpositionierungsvorrichtung erreicht werden, wobei eine Einhaltung des Abstands infolge des Anschlagelements vorteilhaft reproduzierbar ist. Zudem kann vorteilhaft ein von einem Bediener bevorzugter Abstand mittels des Anschlagelements voreingestellt werden, der nach einem Einfahren und einem darauffolgenden Ausfahren des Einstellelements erneut erreicht werden soll. Somit kann ein hoher Bedienkomfort erreicht werden. Das Fixierelement ist um eine zumindest im Wesentlichen senkrecht zu einer Bewegungsachse des Einstellelements verlaufende Bewegungsachse schwenkbar gelagert. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Es ist jedoch auch denkbar, dass das Fixierelement um eine andere Bewegungsachse schwenkbar gelagert ist, wie beispielsweise um eine zumindest im Wesentlichen parallel zur Bewegungsachse des Einstellelements verlaufende Bewegungsachse. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels der erfindungsgemäßen Ausgestaltung kann vorteilhaft eine zuverlässige Fixierung des Einstellelements erreicht werden. Zudem kann mittels einer erfindungsgemäßen Anordnung der Bewegungsachse eine positive Auswirkung auf eine Selbsthemmung eines Lösens einer mittels des Fixierelements erzeugten Haltekraft erreicht werden.

Ferner wird vorgeschlagen, dass das Fixierelement eine Bewegungsachse aufweist, die das Einstellelement schneidet. Besonders bevorzugt verläuft die Bewegungsachse des Fixierelements hierbei, betrachtet entlang einer zumindest im Wesentlichen senkrecht zur Bewegungsachse des Einstellelements verlaufenden Richtung, durch das Einstellelement hindurch. Somit kann vorteilhaft ein Lösen des Fixierelements infolge einer Einwirkung einer Kraft über einen Hebelarm des Einstellelements vermieden werden. Es kann somit besonders bevorzugt eine sichere Fixierung des Einstellelements zumindest in einer Position des Einstellelements relativ zum Gehäuse der Handwerkzeugmaschinenpositionierungsvorrichtung erreicht werden. Die Einstelleinheit umfasst zumindest ein Federelement, das zumindest eine Federkraftkomponente in eine zumindest im Wesentlichen parallel zur Bewegungsachse des Einstellelements verlaufende Richtung und in eine zumindest im Wesentlichen senkrecht zur Bewegungsachse des Einstellelements verlaufende Richtung erzeugt. Unter einem "Federelement" soll insbesondere ein makroskopisches Element verstanden werden, das zumindest einen Abstand von zumindest zwei Enden aufweist, der in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung des Abstands abhängige und vorzugsweise zu der Veränderung proportionale Gegenkraft erzeugt, die der Veränderung entgegen wirkt. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement kann hierbei als Druckfeder, als Zugfeder, als Schraubenfeder, als Tellerfeder, als Evolutfeder usw. ausgebildet sein. Mittels der erfindungsgemäßen Ausgestaltung kann vorteilhaft eine selbsttätige Rückstellung des Fixierelements in zumindest eine Position erreicht werden. Zudem kann vorteilhaft infolge einer Federkraft des Federelements in die zumindest im Wesentlichen parallel zur Bewegungsachse des Einstellelements verlaufende Richtung ein Lagerspielausgleich eines Lagerelements der Einstelleinheit ausgeglichen werden.

Des Weiteren wird vorgeschlagen, dass die Einstelleinheit zumindest das Federelement umfasst, das als Schenkelfeder ausgebildet ist. Somit kann konstruktiv einfach eine Federkraftkomponente in eine zumindest im Wesentlichen parallel zur Bewegungsachse des Einstellelements verlaufende Richtung und in eine zumindest im Wesentlichen senkrecht zur Bewegungsachse des Einstellelements verlaufende Richtung erzeugt werden. Ferner kann vorteilhaft eine kompakte Anordnung des Federelements zur Erzeugung der Federkraftkomponenten in zwei verschiedene Richtungen erreicht werden.

Ferner wird vorgeschlagen, dass die Einstelleinheit zumindest ein Bewegungsbegrenzungselement zu einer Begrenzung einer Bewegung des Fixierelements in zumindest eine Richtung um die Bewegungsachse des Fixierelements aufweist. Das Bewegungsbegrenzungselement ist vorzugsweise einstückig mit dem Fixierelement ausgebildet. Es ist jedoch auch denkbar, dass das Bewegungsbegrenzungselement getrennt von dem Fixierelement ausgebildet ist und mittels zumindest eines, einem Fachmann als sinnvoll erscheinenden Befestigungselements kraftschlüssig und/oder formschlüssig am Fixierelement fixiert ist. Mittels der Ausgestaltung der Handwerkzeugmaschinenpositionierungsvorrichtung kann vorteilhaft eine Bewegung des Fixierelements infolge einer Federkraft des Federelements begrenzt werden. Zudem kann vorteilhaft eine Bewegung des Fixierelements über einen Punkt hinaus vermieden werden.

Zudem wird vorgeschlagen, dass das Fixierelement eine Aufnahmeausnehmung aufweist, durch die sich das Einstellelement hindurch erstreckt. Die Aufnahmeausnehmung wird bevorzugt von den zwei sich gegenüberliegenden Klemmflächen des Fixierelements begrenzt. Ferner weist die Aufnahmeausnehmung bevorzugt, betrachtet in einer zumindest im Wesentlichen senkrecht zur Bewegungsachse des Einstellelements verlaufenden Ebene, zumindest in einer Position des Fixierelements eine größere maximale Erstreckung auf als eine maximale Erstreckung des Einstellelements. Mittels der Ausgestaltung kann vorteilhaft eine Durchführbarkeit des Einstellelements ermöglicht werden, um eine Einstellung eines Abstands des Gehäuses relativ zur Werkzeugaufnahme und/oder relativ zur Werkstückauflagefläche der tragbaren Werkzeugmaschine durch ein Verschieben des Einstellelements relativ zum Gehäuse der Handwerkzeugmaschinenpositionierungsvorrichtung zu ermöglichen.

Des Weiteren wird vorgeschlagen, dass die Handwerkzeugmaschinenpositionierungsvorrichtung zumindest eine Lagereinheit zu einer schwenkbaren Lagerung des Fixierelements umfasst, die zumindest eine von einer kreisförmigen Ausnehmung verschiedene Lagerausnehmung aufweist. Besonders bevorzugt weist die Lagerausnehmung zumindest eine Seitenfläche auf, die, betrachtet in einer zumindest im Wesentlichen senkrecht zu einer Bewegungsachse eines in der Lagerausnehmung angeordneten Lagerbolzenelements verlaufenden Ebene, eine von einer kreisbogenförmigen Ausgestaltung verschiedene Ausgestaltung aufweist. Besonders bevorzugt weist die Lagerausnehmung zumindest zwei Seitenflächen auf, die, betrachtet in einer zumindest im Wesentlichen senkrecht zu einer Bewegungsachse eines in der Lagerausnehmung angeordneten Lagerbolzenelements verlaufenden Ebene, eine von einer kreisbogenförmigen Ausgestaltung verschiedene Ausgestaltung aufweisen. Somit kann insbesondere mittels eines Zusammenwirkens mit einer Federkraft des Federelements ein Spielausgleich des in der Lagerausnehmung angeordneten Lagerbolzenelements erreicht werden.

Ferner wird vorgeschlagen, dass das Fixierelement zumindest einen Reibbelag aufweist, der zumindest an der Klemmfläche angeordnet ist. Unter einem "Reibbelag" soll hier insbesondere ein Belag verstanden werden, der einen Reibungskoeffizienten zwischen zwei sich berührenden Elementen im Vergleich zu einem Reibungskoeffizienten zwischen zwei Elementen, die entkoppelt sind von dem Belag, gezielt erhöht. Der Reibbelag kann hierbei aus Kunststoff, aus Elastomeren, aus Karbon, aus Keramik oder aus einem anderen, einem Fachmann als sinnvoll erscheinenden Werkstoff ausgebildet sein. Es kann vorteilhaft eine große Haltekraft zu einer Fixierung des Einstellelements zumindest in einer Position relativ zum Gehäuse der Handwerkzeugmaschinenpositionierungsvorrichtung erreicht werden.

Die Erfindung geht ferner aus von einer Werkzeugmaschine, insbesondere einer tragbaren Werkzeugmaschine, mit einer erfindungsgemäßen Handwerkzeugmaschinenpositionierungsvorrichtung. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 7 kg. Die tragbare Werkzeugmaschine ist besonders bevorzugt als elektrisch betreibbarer Rasentrimmer ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Oberfräse, usw. Mittels der erfindungsgemäßen Ausgestaltung kann ein hoher Bedienkomfort bei einer Bedienung der tragbaren Werkzeugmaschine erreicht werden.

Die erfindungsgemäße Handwerkzeugmaschinenpositionierungsvorrichtung und/oder die erfindungsgemäße Werkzeugmaschine sollen/soll hierbei nicht auf die oben beschriebene Anwendung und Ausführungsform beschränkt sein. Insbesondere können die erfindungsgemäße Handwerkzeugmaschinenpositionierungsvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Handwerkzeugmaschinenpositionierungsvorrichtung in einer schematischen Darstellung,
- Fig. 2: eine Detailansicht der erfindungsgemäßen Handwerkzeugmaschinenpositionierungsvorrichtung in einer schematischen Darstellung,
- Fig. 3: eine Detailansicht einer Lagerausnehmung einer Lagereinheit der erfindungsgemäßen Handwerkzeugmaschinenpositionierungsvorrichtung in einer schematischen Darstellung und
- Fig. 4: eine Detailansicht eines Fixierelements einer Einstelleinheit der erfindungsgemäßen Handwerkzeugmaschinenpositionierungsvorrichtung in einer schematischen Darstellung.

### Beschreibung des Ausführungsbeispiels

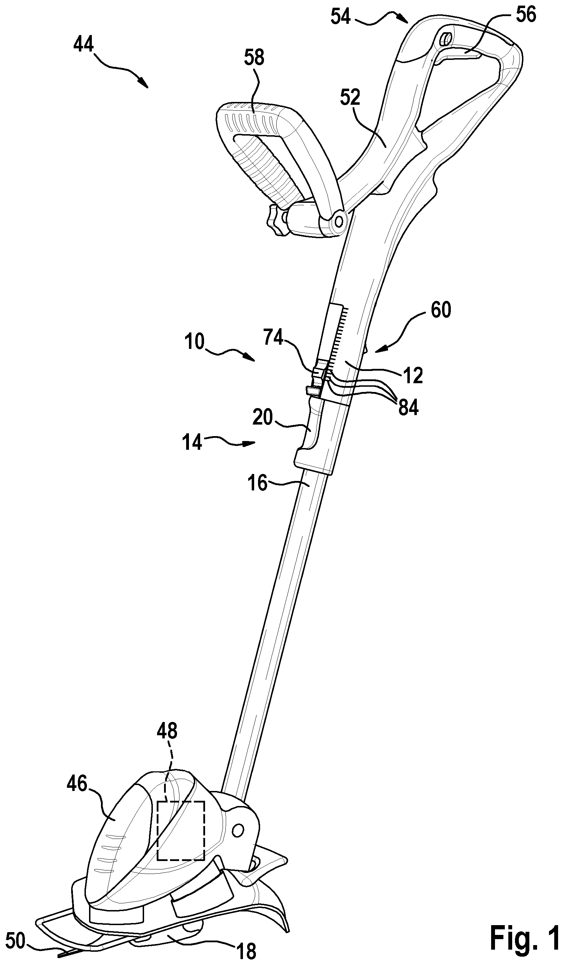

Figur 1 zeigt eine als Rasentrimmer ausgebildete tragbare Werkzeugmaschine 44 mit einer Handwerkzeugmaschinenpositionierungsvorrichtung 10. Die tragbare Werkzeugmaschine 44 ist als ein mittels eines Akkumulatorpakets oder eines Stromkabels elektrisch betreibbarer Rasentrimmer ausgebildet. Ferner weist die tragbare Werkzeugmaschine 44 ein Antriebseinheitsgehäuse 46 auf, das eine Antriebseinheit 48 der tragbaren Werkzeugmaschine 44 umschließt. Zudem ist es denkbar, dass das Antriebseinheitsgehäuse 46 zusätzlich zur Antriebseinheit 48 eine Abtriebseinheit (hier nicht näher dargestellt) zu einer Übersetzung und/oder zu einer Untersetzung von einer mittels der Antriebseinheit 48 erzeugten Antriebskraft und/oder eines mittels der Antriebseinheit 48 erzeugten Antriebsmoments umfasst. Die Antriebseinheit 48 treibt in zumindest einem Betriebszustand der tragbaren Werkzeugmaschine 44 ein mit einer Werkzeugaufnahme 18 verbundenes Bearbeitungswerkzeug 50 an. Das Bearbeitungswerkzeug 50 ist als Rasentrimmmesser ausgebildet. Es ist jedoch auch denkbar, dass das Bearbeitungswerkzeug 50 von einer Rasentrimmschnureinheit gebildet ist, die mit der Werkzeugaufnahme 18 verbunden ist. Des Weiteren weist die tragbare Werkzeugmaschine 44 zumindest ein Handgriffgehäuse 52 auf, das einen Handgriff der tragbaren Werkzeugmaschine 44 bildet. Zudem ist im Handgriffgehäuse 52 eine Elektronikschalteinheit 54 zu einer Inbetriebnahme und zu einem Abschalten der Antriebseinheit 48 angeordnet. Die Elektronikschalteinheit 54 umfasst hierzu zumindest ein Handgriffschaltelement 56, das von einem Bediener zu einer Inbetriebnahme der Antriebseinheit 48 betätigbar ist. Ferner ist am Handgriffgehäuse 52 zumindest ein verstellbarer Zusatzhandgriff 58 der tragbaren Werkzeugmaschine 44 angeordnet.

Das Handgriffgehäuse 52 ist ferner einstückig mit einem Gehäuse 12 der Handwerkzeugmaschinenpositionierungsvorrichtung 10 ausgebildet. Die Handwerkzeugmaschinenpositionierungsvorrichtung 10 umfasst ferner zumindest eine Einstelleinheit 14, die zumindest ein relativ zum Gehäuse 12 der Handwerkzeugmaschinenpositionierungsvorrichtung 10 beweglich gelagertes Einstellelement 16 zu einer Einstellung eines Abstands des Gehäuses 12 der Handwerkzeugmaschinenpositionierungsvorrichtung 10 relativ zur Werkzeugaufnahme 18 und/oder relativ zu einer Werkstückauflagefläche der tragbaren Werkzeugmaschine 44 aufweist. Die Werkstückauflagefläche der tragbaren Werkzeugmaschine 44 kann hierbei von einer Außenfläche eines Rades einer Rasenauflageeinheit (hier nicht näher dargestellt) der tragbaren Werkzeugmaschine 44 gebildet sein, mit der ein Bediener auf eine, einem Fachmann bereits bekannte Art und Weise die tragbare Werkzeugmaschine 44 über ein als Rasen ausgebildetes Werkstück bzw. über eine als Rasenfläche ausgebildete Werkstückfläche schieben kann. Das Einstellelement 16 ist als Einstellführungsstange ausgebildet. Hierbei ist das Einstellelement 16 an dem Antriebseinheitsgehäuse 46 fixiert. Ferner ist das Einstellelement 16 in das Gehäuse 12 der Handwerkzeugmaschinenpositionierungsvorrichtung 10 bzw. in das Handgriffgehäuse 52 translatorisch hinein bewegbar gelagert. Somit ist das Antriebseinheitsgehäuse 46 über das Einstellelement 16 relativ zum Gehäuse 12 der Handwerkzeugmaschinenpositionierungsvorrichtung 10 bzw. relativ zum Handgriffgehäuse 52 beweglich gelagert.

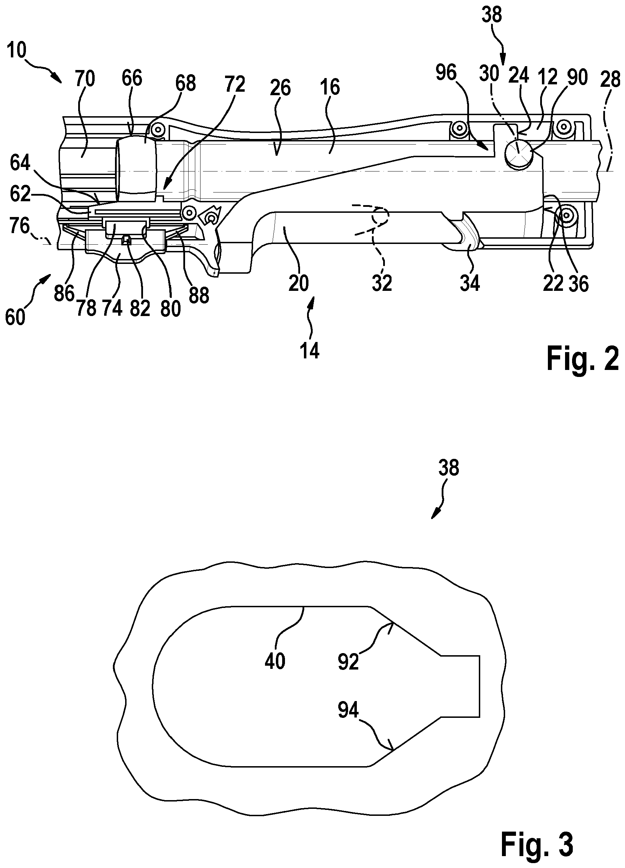

Des Weiteren weist die Handwerkzeugmaschinenpositionierungsvorrichtung 10 zumindest eine Anschlageinheit 60 auf, die zu einer Variation einer maximalen Bewegungsstrecke des Einstellelements 16 in eine von dem Gehäuse 12 der Handwerkzeugmaschinenpositionierungsvorrichtung 10 weggerichtete Richtung zumindest ein beweglich gelagertes Anschlagelement 62 aufweist (Figur 2). Das Anschlagelement 62 ist translatorisch beweglich gelagert. Hierbei ist das Anschlagelement 62 translatorisch im Gehäuse 12 der Handwerkzeugmaschinenpositionierungsvorrichtung 10 bzw. im Handgriffgehäuse 52 beweglich gelagert. Das Anschlagelement 62 weist ferner zumindest eine Schrägfläche 64 auf, die zu einer Begrenzung einer maximalen Bewegungsstrecke des Einstellelements 16 mit einer Fläche 66 eines Lagerelements 68 der Einstelleinheit 14 zusammenwirkt. Das Lagerelement 68 ist an einer dem Antriebseinheitsgehäuse 46 abgewandten Ende des Einstellelements 16 am Einstellelement 16 angeordnet. Hierbei ist das Lagerelement 68 als Gleitlagerelement ausgebildet, das das Einstellelement 16 beweglich in einer Einstellelementaufnahme 70 des Gehäuses 12 der Handwerkzeugmaschinenpositionierungsvorrichtung 10 bzw. des Handgriffgehäuses 52 lagert. Das Lagerelement 68 ist mittels einer Presspassung an dem Einstellelement 16 fixiert. Es ist jedoch auch denkbar, dass das Lagerelement 68 mittels einer anderen, einem Fachmann als sinnvoll erscheinenden Verbindungsart, wie beispielsweise mittels einer stoffschlüssigen und/oder einer formschlüssigen Verbindung, am Einstellelement 16 fixiert ist. Die Schrägfläche 64 des Anschlagelements 62 verläuft zumindest im Wesentlichen quer zu einer Bewegungsachse 28 des Einstellelements 16. Hierbei ist die Schrägfläche 64 auf einer dem Einstellelement 16 zugewandten Seite des Anschlagelements 62 angeordnet. Ferner weist die Schrägfläche 64 zumindest einen Stoppflächenbereich 72 auf, der sich zumindest im Wesentlichen senkrecht zur Bewegungsachse 28 des Einstellelements 16 erstreckt. Der Stoppflächenbereich 72 wird von einem stufenförmigen Absatz der Schrägfläche 64 bzw. des Anschlagelements 62 gebildet.

Ferner umfasst die Anschlageinheit 60 zu einer Bewegung des Anschlagelements 62 zumindest ein beweglich gelagertes Bedienelement 74. Hierbei ist das Bedienelement 74 translatorisch beweglich im Gehäuse 12 der Handwerkzeugmaschinenpositionierungsvorrichtung 10 bzw. im Handgriffgehäuse 52 gelagert. Zudem ist das Bedienelement 74 relativ zum Anschlagelement 62 beweglich gelagert. Das Bedienelement 74 ist, zumindest betrachtet entlang einer zumindest im Wesentlichen parallel zur Bewegungsachse 28 des Einstellelements 16 verlaufenden Bewegungsachse 76 des Bedienelements 74, formschlüssig mit dem Anschlagelement 62 verbunden. Hierzu weist das Bedienelement 74 zumindest einen Verbindungsfortsatz 78 auf. Der Verbindungsfortsatz 78 erstreckt sich ausgehend von dem Bedienelement 74 in Richtung des Anschlagelements 62. Das Anschlagelement 62 umfasst zu einer Aufnahme des Verbindungsfortsatzes 78 zumindest eine Verbindungsausnehmung 80. Der Verbindungsfortsatz 78 ist in der Verbindungsausnehmung 80 entlang einer zumindest im Wesentlichen senkrecht zur Bewegungsachse 76 des Bedienelements 74 bzw. zur Bewegungsachse 28 des Einstellelements 16 beweglich gelagert.

Das Bedienelement 74 weist ferner zu einer Fixierung des Anschlagelements 62 einen Rastfortsatz 82 auf, der in zumindest einer Rastausnehmung 84 des Gehäuses 12 der Handwerkzeugmaschinenpositionierungsvorrichtung 10 bzw. des Handgriffgehäuses 52 einrastbar ist (Figur 1). Insgesamt weist das Gehäuse 12 der Handwerkzeugmaschinenpositionierungsvorrichtung 10 bzw. das Handgriffgehäuse 52 eine Vielzahl hintereinander angeordnete Rastausnehmungen 84 auf, in die der Rastfortsatz 82 einrastbar ist. Der Rastfortsatz 82 erstreckt sich ausgehend von dem Bedienelement 74 in eine von dem Anschlagelement 62 abgewandte Richtung. Das Anschlagelement 62 wird mittels eines Zusammenwirkens des Verbindungsfortsatzes 78, die Verbindungsausnehmung 80 begrenzenden Randbereiche des Anschlagelements 62, dem Rastfortsatz 82 und der zumindest einen Rastausnehmung 84 gegen eine Bewegung entlang einer zumindest im Wesentlichen parallel zur Bewegungsachse 28 des Einstellelements 16 verlaufenden Richtung arretiert. Zudem umfasst die Anschlageinheit 60 zumindest ein Einrastfederelement 86, das das Bedienelement 74 der Anschlageinheit 60 mit einer Federkraft beaufschlagt. Hierdurch wird der Rastfortsatz 82 bei einem Erreichen einer Rastausnehmung 84 mit einer Federkraft des Einrastfederelements 86 in die Rastausnehmung 84 hinein bewegt. Das Einrastfederelement 86 ist einstückig mit dem Bedienelement 74 ausgebildet. Es ist jedoch auch denkbar, dass das Einrastfederelement 86 von einem vom Bedienelement 74 getrennt ausgebildeten Element gebildet ist, wie beispielsweise von einer Druckfeder, die zwischen dem Bedienelement 74 und dem Anschlagelement 62 angeordnet ist und somit das Bedienelement 74 mit einer Federkraft beaufschlagt. Insgesamt umfasst die Anschlageinheit 60 zwei einstückig mit dem Bedienelement 74 ausgebildete Einrastfederelemente 86, 88, die das Bedienelement 74 in eine vom Anschlagelement 62 abgewandte Richtung mit einer Federkraft beaufschlagen. Die Einrastfederelemente 86, 88 werden jeweils von einem federelastischen Federschenkel des Bedienelements 74 gebildet. Die als federelastische Federschenkel ausgebildeten Einrastfederelemente 86, 88 sind hierbei, betrachtet entlang einer zumindest im Wesentlichen parallel zur Bewegungsachse 28 des Einstellelements 16 verlaufenden Richtung, an zwei sich abgewandten Seiten des Bedienelements 74 angeordnet.

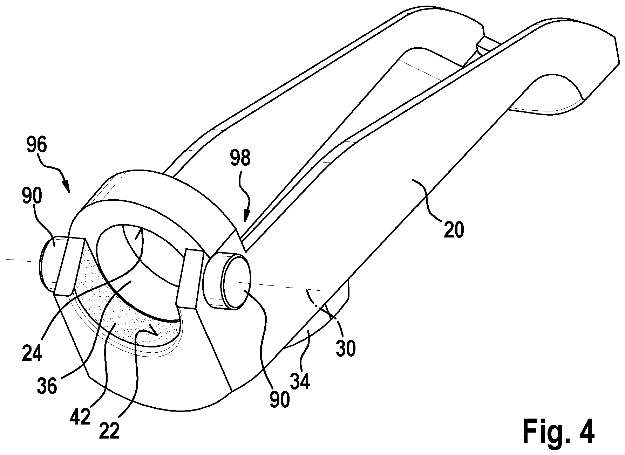

Des Weiteren umfasst die Einstelleinheit 14 zumindest ein schwenkbar gelagertes Fixierelement 20 zu einer Fixierung des Einstellelements 16 in zumindest einer Position relativ zum Gehäuse 12 der Handwerkzeugmaschinenpositionierungsvorrichtung 10. Das Fixierelement 20 ist hierbei um eine zumindest im Wesentlichen senkrecht zur Bewegungsachse 28 des Einstellelements 16 verlaufende Bewegungsachse 30 des Fixierelements 20 schwenkbar gelagert. Das Fixierelement 20 umfasst zumindest eine Klemmfläche 22, die zumindest in einer Position des Fixierelements 20 an einer Außenfläche 26 des Einstellelements 16 anliegt (Figuren 2 und 4). Insgesamt weist das Fixierelement 20 zwei Klemmflächen 22, 24 auf, die zumindest in einer Position des Fixierelements 20 an der Außenfläche 26 des Einstellelements 16 anliegen. Hierbei sind die zwei Klemmflächen 22, 24, betrachtet entlang einer zumindest im Wesentlichen senkrecht zur Bewegungsachse 30 des Fixierelements 20 verlaufenden Richtung, an zwei sich gegenüberliegenden Seiten des Fixierelements 20 angeordnet. Somit sind die zwei Klemmflächen 22, 24 sich zugewandt. Ferner umfasst die Einstelleinheit 14 zumindest ein Federelement 32, das das Fixierelement 20 mit einer Federkraft beaufschlagt. Das Federelement 32 ist als Schenkelfeder ausgebildet. Hierbei stützt sich das Federelement 32 mit einem Ende am Fixierelement 20 ab und mit einem Ende stützt sich das Federelement 32 am Gehäuse 12 der Handwerkzeugmaschinenpositionierungsvorrichtung 10 bzw. am Handgriffgehäuse 52 ab. Somit ist das Federelement 32, betrachtet entlang einer zumindest im Wesentlichen senkrecht zur Bewegungsachse 28 des Einstellelements 16 verlaufenden Richtung, zwischen dem Gehäuse 12 der Handwerkzeugmaschinenpositionierungsvorrichtung 10 bzw. zwischen dem Handgriffgehäuse 52 und dem Fixierelement 20 angeordnet.

Das Federelement 32 erzeugt zumindest eine Federkraftkomponente in eine zumindest im Wesentlichen parallel zur Bewegungsachse 28 des Einstellelements 16 verlaufende Richtung und eine Federkraftkomponente in eine zumindest im Wesentlichen senkrecht zur Bewegungsachse 28 des Einstellelements 16 verlaufende Richtung. Die Federkraftkomponente in die zumindest im Wesentlichen parallel zur Bewegungsachse 28 des Einstellelements 16 verlaufende Richtung bewirkt ein Andrücken eines Lagerbolzenelements 90 der Einstelleinheit 14 an zumindest eine Andrückfläche 92 einer Lagerausnehmung 40 einer Lagereinheit 38 der Handwerkzeugmaschinenpositionierungsvorrichtung 10 (Figur 3). Insgesamt weist die Lagerausnehmung 40 zwei Andrückflächen 92, 94 auf. Die Andrückflächen 92, 94 sind hierbei, betrachtet in einer zumindest im Wesentlichen senkrecht zur Bewegungsachse 30 des Fixierelements 20 verlaufenden Ebene, abweichend von einer kreisbogenförmigen Ausgestaltung ausgebildet. Zudem sind die Andrückflächen 92, 94 relativ zueinander geneigt angeordnet. Somit umfasst die Handwerkzeugmaschinenpositionierungsvorrichtung 10 zumindest die Lagereinheit 38 zu einer schwenkbaren Lagerung des Fixierelements 20, die zumindest eine von einer kreisförmigen Ausnehmung verschiedene Lagerausnehmung 40 aufweist. Das Lagerbolzenelement 90 ist einstückig mit dem Fixierelement 20 ausgebildet. Infolge des Andrückens des Lagerbolzenelements 90 an die Andrückflächen 92, 94 wird ein Lagerspiel des Lagerbolzenelements 90 ausgeglichen.

Die Federkraftkomponente in die zumindest im Wesentlichen senkrecht zur Bewegungsachse 28 des Einstellelements 16 verlaufende Richtung bewirkt eine Schwenkkraft, die das Fixierelement 20 in eine vom Einstellelement 16 weggerichtete Richtung beaufschlagt. Somit wird das Fixierelement 20 infolge des Federelements 32 um die Bewegungsachse 30 des Fixierelements 20 geschwenkt, sobald eine Betätigungskraft auf das Fixierelement 20 aufgehoben wird. Ein Angriffspunkt des Federelements 32 ist hierbei relativ zur Bewegungsachse 30 des Fixierelements 20 beabstandet angeordnet. Hierdurch kann unter Ausnutzung eines Hebelarms des Fixierelements 20 eine große Kraft mittels des Federelements 32 erzeugt werden, die das Fixierelement 20 zu einer Fixierung des Einstellelements 16 in einer Position relativ zum Gehäuse 12 der Handwerkzeugmaschinenpositionierungsvorrichtung 10 bzw. relativ zum Handgriffgehäuse 52 um die Bewegungsachse 30 des Fixierelements 20 schwenkt, sobald eine Betätigungskrafteinwirkung eines Bedieners auf das Fixierelement 20 aufgehoben wird. Die Bewegungsachse 30 des Fixierelements 20 schneidet hierbei das Einstellelement 16. Zu einer Begrenzung einer Bewegung des Fixierelements 20 in zumindest eine Richtung um die Bewegungsachse 30 des Fixierelements 20 infolge einer Federkraft des Federelements 32 umfasst die Einstelleinheit 14 zumindest ein Bewegungsbegrenzungselement 34. Das Bewegungsbegrenzungselement 34 ist hierbei einstückig mit dem Fixierelement 20 ausgebildet. Zu einer Begrenzung einer Bewegung des Fixierelements 20 in zumindest eine Richtung um die Bewegungsachse 30 des Fixierelements 20 wirkt das Bewegungsbegrenzungselement 34 mit einem Randbereich des Gehäuses 12 der Handwerkzeugmaschinenpositionierungsvorrichtung 10 bzw. des Handgriffgehäuses 52 zusammen.

Zudem weist das Fixierelement 20 eine Aufnahmeausnehmung 36 auf, durch die sich das Einstellelement 16 hindurch erstreckt (Figuren 2 und 4). Die Aufnahmeausnehmung 36 wird durch die zwei Klemmflächen 22, 24 des Fixierelements 20 begrenzt. Die Klemmflächen 22, 24 sind hierbei mittels Verbindungsbereichen 96, 98 des Fixierelements 20 entlang einer um die Bewegungsachse 28 des Einstellelements 16 verlaufende Umfangsrichtung miteinander verbunden. Somit begrenzen die zwei Klemmflächen 22, 24 zusammen mit den Verbindungsbereichen 96, 98 die Aufnahmeausnehmung 36. Die Aufnahmeausnehmung 36 erstreckt sich hierbei entlang der Umfangsrichtung in einem montierten Zustand vollständig um das Einstellelement 16 herum. Zudem weist die Aufnahmeausnehmung 36 entlang einer zumindest im Wesentlichen senkrecht zur Bewegungsachse 30 des Fixierelements 20 verlaufenden Richtung eine größere Erstreckung auf als eine Erstreckung des Einstellelements 16. Somit kann bei einer zumindest im Wesentlichen parallelen Ausrichtung einer Mittelachse der Aufnahmeausnehmung 36 relativ zur Bewegungsachse 28 des Einstellelements 16 eine Bewegung des Einstellelements 16 relativ zum Fixierelement 20 erfolgen. Eine zumindest im Wesentlichen parallele Ausrichtung der Mittelachse der Aufnahmeausnehmung 36 relativ zur Bewegungsachse 28 des Fixierelements 20 wird durch eine Schwenkbewegung des Fixierelements 20 um die Bewegungsachse 30 des Fixierelements 20 entgegen einer Federkraft des Federelements 32 erreicht. Ferner weist das Fixierelement 20 zumindest einen Reibbelag 42 auf, der zumindest an einer der zumindest zwei Klemmflächen 22, 24 angeordnet ist. Es ist jedoch auch denkbar, dass das Fixierelement 20 zwei Reibbeläge 42 aufweist, wobei an jeder der zwei Klemmflächen 22, 24 einer der zwei Reibbeläge 42 angeordnet ist.

Zu einer Einstellung eines Abstands des Gehäuses 12 der Handwerkzeugmaschinenpositionierungsvorrichtung 10 bzw. des Handgriffgehäuses 52 relativ zur Werkzeugaufnahme 18 der tragbaren Werkzeugmaschine 44 betätigt ein Bediener der tragbaren Werkzeugmaschine 44 das Fixierelement 20. Hierdurch wird eine Klemmkraft zu einer Fixierung des Einstellelements 16 aufgehoben. Das Einstellelement 16 wird vom Bediener relativ zum Gehäuse 12 der Handwerkzeugmaschinenpositionierungsvorrichtung 10 bzw. relativ zum Handgriffgehäuse 52 aus dem Gehäuse 12 der Handwerkzeugmaschinenpositionierungsvorrichtung 10 bzw. aus dem Handgriffgehäuse 52 hinaus gezogen. Nachdem der Bediener einen für ihn bevorzugten Abstand des Gehäuses 12 der Handwerkzeugmaschinenpositionierungsvorrichtung 10 bzw. des Handgriffgehäuses 52 relativ zur Werkzeugaufnahme 18 der tragbaren Werkzeugmaschine 44 gefunden hat, kann der Bediener durch eine Einstellung einer Position des Anschlagelements 62 eine Wiederholbarkeit einer Einstellung des für ihn bevorzugten Abstands des Gehäuses 12 der Handwerkzeugmaschinenpositionierungsvorrichtung 10 bzw. des Handgriffgehäuses 52 relativ zur Werkzeugaufnahme 18 der tragbaren Werkzeugmaschine 44 gewährleisten. Hierzu betätigt der Bediener das Bedienelement 74 in Richtung des Gehäuses 12 der Handwerkzeugmaschinenpositionierungsvorrichtung 10 bzw. des Handgriffgehäuses 52. Hierdurch wird das Bedienelement 74 relativ zum Anschlagelement 62 in Richtung des Anschlagelements 62 bewegt und der Rastfortsatz 82 des Bedienelements 74 gelangt außer Eingriff der Rastausnehmung 84. Infolge einer translatorischen Bewegung des Bedienelements 74 entlang der Bewegungsachse 76 des Bedienelements 74 wird das Anschlagelement 62 ebenfalls zumindest im Wesentlichen parallel zur Bewegungsachse 28 des Einstellelements 16 bewegt. Das Anschlagelement 62 wird solange in eine zumindest im Wesentlichen parallel zur Bewegungsachse 28 des Einstellelements 16 verlaufende Richtung verschoben, bis das Anschlagelement 62 am Lagerelement 68 anschlägt. Hierdurch wird durch das Anschlagelement 62 eine maximale Bewegungsstrecke des Einstellelements 16 begrenzt, die einer Position des Einstellelements 16 entspricht, die dem für einen Bediener bevorzugten Abstand des Gehäuses 12 der Handwerkzeugmaschinenpositionierungsvorrichtung 10 bzw. des Handgriffgehäuses 52 relativ zur Werkzeugaufnahme 18 der tragbaren Werkzeugmaschine 44 entspricht.

Nach einer Aufhebung einer Krafteinwirkung des Bedieners auf das Bedienelement 74 kann der Rastfortsatz 82 infolge einer Federkraft der federelastischen Federschenkel des Bedienelements 74 in eine Rastausnehmung 84 einrasten. Somit wird mittels des Anschlagelements 62 ein zuvor eingestellter Abstand des Gehäuses 12 der Handwerkzeugmaschinenpositionierungsvorrichtung 10 bzw. des Handgriffgehäuses 52 relativ zur Werkzeugaufnahme 18 der tragbaren Werkzeugmaschine 44 nach einem Einschieben des Einstellelements 16 in das Gehäuse 12 der Handwerkzeugmaschinenpositionierungsvorrichtung 10 bzw. in das Handgriffgehäuse 52 wieder durch ein Herausziehen des Einstellelements 16 aus dem Gehäuse 12 der Handwerkzeugmaschinenpositionierungsvorrichtung 10 bzw. aus dem Handgriffgehäuse 52 infolge eines Anschlagens des Einstellelements 16 an dem Anschlagelement 62 wiederholbar einstellbar. Eine maximale Bewegungsstrecke des Einstellelements 16 aus dem Gehäuse 12 der Handwerkzeugmaschinenpositionierungsvorrichtung 10 bzw. aus dem Handgriffgehäuse 52 hinaus wird nach einer Einstellung einer Position des Anschlagelements 62 durch ein Anschlagen des Lagerelements 68 an der Schrägfläche 64 bzw. an dem Stoppflächenbereich 72 der Schrägfläche 64 begrenzt. Zudem wird nach einer Aufhebung einer Krafteinwirkung des Bedieners auf das Fixierelement 20 das Fixierelement 20 infolge einer Federkraft des Federelements 32 um die Bewegungsachse 30 des Fixierelements 20 geschwenkt. Hierdurch werden die Klemmflächen 22, 24 an die Außenfläche 26 des Einstellelements 16 angedrückt und das Einstellelement 16 ist in einer Position relativ zum Gehäuse 12 der Handwerkzeugmaschinenpositionierungsvorrichtung 10 bzw. relativ zum Handgriffgehäuse 52 in einer Position fixiert.

## Patentansprüche

1. Handwerkzeugmaschinenpositionierungsvorrichtung mit zumindest einem Gehäuse (12) und mit zumindest einer Einstelleinheit (14), die zumindest ein beweglich gelagertes Einstellelement (16) zu einer Einstellung eines Abstands des Gehäuses (12) relativ zu einer Werkzeugaufnahme (18) und/oder relativ zu einer Werkstückauflagefläche einer tragbaren Werkzeugmaschine aufweist und die zumindest ein schwenkbar gelagertes Fixierelement (20) zu einer Fixierung des Einstellelements (16) in zumindest einer Position aufweist, wobei das Fixierelement (20) zumindest eine Klemmfläche (22, 24) aufweist, die zumindest in einer Position des Fixierelements (20) an einer Außenfläche (26) des Einstellelements (16) anliegt, wobei das Fixierelement (20) um eine zumindest im Wesentlichen senkrecht zu einer Bewegungsachse (28) des Einstellelements (16) verlaufende Bewegungsachse (30) schwenkbar gelagert ist, **dadurch gekennzeichnet, dass** die Einstelleinheit (14) zumindest ein Federelement (32) umfasst, das das Fixierelement (20) mit einer Federkraft beaufschlagt und das zumindest eine Federkraftkomponente in eine zumindest im Wesentlichen parallel zu einer Bewegungsachse (28) des Einstellelements (16) verlaufende Richtung und in eine zumindest im Wesentlichen senkrecht zur Bewegungsachse (28) des Einstellelements (16) verlaufende Richtung erzeugt.

2. Handwerkzeugmaschinenpositionierungsvorrichtung nach Anspruch 1, **dadurch gekennzeichnet, dass** das Fixierelement (20) eine Bewegungsachse (30) aufweist, die das Einstellelement (16) schneidet.

3. Handwerkzeugmaschinenpositionierungsvorrichtung nach einem der vorhergehenden Ansprüche, **dadurch gekennzeichnet, dass** die Einstelleinheit (14) zumindest ein Federelement (32) umfasst, das als Schenkelfeder ausgebildet ist.

4. Handwerkzeugmaschinenpositionierungsvorrichtung nach einem der vorhergehenden Ansprüche, **dadurch gekennzeichnet, dass** die Einstelleinheit (14) zumindest ein Bewegungsbegrenzungselement (34) zu einer Begrenzung einer Bewegung des Fixierelements (20) in zumindest eine Richtung um eine Bewegungsachse (28) des Fixierelements (20) aufweist.

5. Handwerkzeugmaschinenpositionierungsvorrichtung nach einem der vorhergehenden Ansprüche, **dadurch gekennzeichnet, dass** das Fixierelement (20) eine Aufnahmeausnehmung (36) aufweist, durch die sich das Einstellelement (16) hindurch erstreckt.

6. Handwerkzeugmaschinenpositionierungsvorrichtung nach einem der vorhergehenden Ansprüche, **gekennzeichnet durch** zumindest eine Lagereinheit (38) zu einer schwenkbaren Lagerung des Fixierelements (20), die zumindest eine von einer kreisförmigen Ausnehmung verschiedene Lagerausnehmung (40) aufweist.

7. Handwerkzeugmaschinenpositionierungsvorrichtung nach einem der vorhergehenden Ansprüche, **dadurch gekennzeichnet, dass** das Fixierelement (20) zumindest einen Reibbelag (42) aufweist, der zumindest an der Klemmfläche (22, 24) angeordnet ist.

8. Tragbare Werkzeugmaschine, insbesondere Rasentrimmer, mit einer Handwerkzeugmaschinenpositionierungsvorrichtung nach einem der vorhergehenden Ansprüche.

## Claims

1. Portable power tool positioning device having at least one housing (12) and having at least one setting unit (14) which has at least one movably mounted setting element (16) for setting a spacing of the housing (12) relative to a tool receptacle (18) and/or relative to a workpiece support surface of a portable power tool and which has at least one pivotably mounted fixing element (20) for fixing the setting element (16) in at least one position, wherein the fixing element (20) has at least one clamping surface (22, 24) which, at least in one position of the fixing element (20), bears against an outer surface (26) of the setting element (16), wherein the fixing element (20) is mounted so as to be pivotable about a movement axis (30) extending at least substantially perpendicularly to a movement axis (28) of the setting element (16), **characterized in that** the setting element (14) comprises at least one spring element (32) which applies a spring force to the fixing element (20) and which generates at least one spring-force component in a direction extending at least substantially parallel to a movement axis (28) of the setting element (16), and in a direction extending at least substantially perpendicularly to the movement axis (28) of the setting element (16).

2. Portable power tool positioning device according to Claim 1, **characterized in that** the fixing element (20) has a movement axis (30) which intersects the setting element (16).

3. Portable power tool positioning device according to either of the preceding claims, **characterized in that** the setting unit (14) comprises at least one spring element (32) which is configured as a leg spring.

4. Portable power tool positioning device according to one of the preceding claims, **characterized in that** the setting unit (14) has at least one movement limiting element (34) for limiting a movement of the fixing element (20) in at least one direction about a movement axis (28) of the fixing element (20).

5. Portable power tool positioning device according to one of the preceding claims, **characterized in that** the fixing element (20) has a receiving cutout (36) through which the setting element (16) extends.

6. Portable power tool positioning device according to one of the preceding claims, **characterized by** at least one bearing unit (38) for pivotably mounting the fixing element (20), said bearing unit (38) having at least one bearing cutout (40) different from a circular cutout.

7. Portable power tool positioning device according to one of the preceding claims, **characterized in that** the fixing element (20) has at least one friction lining (42) which is arranged at least on the clamping surface (22, 24).

8. Portable power tool, in particular lawn trimmer, having a portable power tool positioning device according to one of the preceding claims.

## Revendications

1. Dispositif de positionnement de machine-outil manuelle comprenant au moins un boîtier (12) et au moins une unité de réglage (14) qui présente au moins un élément de réglage (16) supporté de manière mobile, prévu pour un réglage d'une distance du boîtier (12) par rapport à un logement d'outil (18) et/ou par rapport à une surface d'appui de pièce d'une machine-outil portative, et qui présente au moins un élément de fixation (20) supporté de manière pivotante, prévu pour une fixation de l'élément de réglage (16) dans au moins une position, l'élément de fixation (20) présentant au moins une surface de serrage (22, 24) qui s'applique au moins dans une position de l'élément de fixation (20) contre une surface extérieure (26) de l'élément de réglage (16), l'élément de fixation (20) étant supporté de manière à pouvoir pivoter autour d'un axe de déplacement (30) s'étendant au moins essentiellement perpendiculairement à un axe de déplacement (28) de l'élément de réglage (16), **caractérisé en ce que** l'unité de réglage (14) comprend au moins un élément de ressort (32), qui sollicite l'élément de fixation (20) avec une force de ressort et qui génère au moins une composante de force de ressort dans une direction s'étendant au moins essentiellement parallèlement à un axe de déplacement (28) de l'élément de réglage (16) et dans une direction s'étendant au moins essentiellement perpendiculairement à l'axe de déplacement (28) de l'élément de réglage (16).

2. Dispositif de positionnement de machine-outil manuelle selon la revendication 1, **caractérisé en ce que** l'élément de fixation (20) présente un axe de déplacement (30) qui coupe l'élément de réglage (16).

3. Dispositif de positionnement de machine-outil manuelle selon l'une quelconque des revendications précédentes, **caractérisé en ce que** l'unité de réglage (14) comprend au moins un élément de ressort (32) qui est réalisé en tant que ressort à branches.

4. Dispositif de positionnement de machine-outil manuelle selon l'une quelconque des revendications précédentes, **caractérisé en ce que** l'unité de réglage (14) présente au moins un élément de limitation de déplacement (34) prévu pour limiter un déplacement de l'élément de fixation (20) dans au moins une direction autour d'un axe de déplacement (28) de l'élément de fixation (20).

5. Dispositif de positionnement de machine-outil manuelle selon l'une quelconque des revendications précédentes, **caractérisé en ce que** l'élément de fixation (20) présente un évidement de réception (36) à travers lequel s'étend l'élément de réglage (16).

6. Dispositif de positionnement de machine-outil manuelle selon l'une quelconque des revendications précédentes, **caractérisé par** au moins une unité de palier (38) prévue pour un support sur palier pivotant de l'élément de fixation (20), qui présente au moins un évidement de palier (40) différent d'un évidement de forme circulaire.

7. Dispositif de positionnement de machine-outil manuelle selon l'une quelconque des revendications précédentes, **caractérisé en ce que** l'élément de fixation (20) présente au moins une garniture de friction (42) qui est disposée au moins au niveau de la surface de serrage (22, 24).

8. Machine-outil portative, en particulier coupe-gazon, comprenant un dispositif de positionnement de machine-outil manuelle selon l'une quelconque des revendications précédentes.
